# EUROPEAN PATENT APPLICATION

(11) **EP 4 768 247 A1**
(43) Date of publication of application: **01.07.2026**
(21) Application number: 25211647.0
(22) Date of filing: 28.10.2025
(51) Int. Cl.: B33Y 10/00, B33Y 80/00, B22F 7/00, B22F 7/08, B22F 10/00, B22F 10/38, C23C 24/04, B22F 1/00, C22C 1/04, B22F 7/04, B22F 12/53

(54) **RAPIDLY GENERATED TOOLING**

(30) Priority: 30.12.2024 US 202419005071
(71) Applicant: The Boeing Company, Arlington, VA 22202 (US)
(72) Inventor: BAILEY, Michael Jason, Arlington, VA 22202 (US); JUSTUSSON, Brian P., Arlington, VA 22202 (US); REGISTER, Justin H., Arlington, VA 22202 (US)
(74) Representative: Boult Wade Tennant LLP

(57) **Abstract**

Rapidly generated tooling and methods for rapidly generating tooling for composite layup and cure are presented. A foam block is formed into a tool body with a forming surface having a near net shape. A low CTE material is additively deposited onto the forming surface to form a metal cover

## Description

### BACKGROUND INFORMATION

### 1. Field:

The present disclosure relates generally to composite manufacturing and more specifically to forming tooling for composite manufacturing.

### 2. Background:

Conventional composite layup and cure tooling, such as nickel alloy or carbon tooling, is expensive. Conventional composite layup and cure tooling often takes 12 - 16 weeks or more to arrive from an outside supplier. The conventional composite layup and cure tooling is coefficient of thermal expansion (CTE)-matched tooling to the composite material. Less expensive, non-CTE-matched tooling methods are available, but require lengthy analysis to "compensate" the tool surface for thermal expansion during autoclave cure.

Therefore, it would be desirable to have a method and apparatus that takes into account at least some of the issues discussed above, as well as other possible issues. For example, it would be desirable to provide a composite layup and cure tool that has at least one of less expense or less manufacturing time.

### SUMMARY

An example of the present disclosure provides a method of rapidly generating tooling for composite layup and cure. A foam block is formed into a tool body with a forming surface having a near net shape. A low CTE material is additively deposited onto the forming surface to form a metal cover.

Another example of the present disclosure provides a rapidly generated tooling for composite layup and cure. The rapidly generated tooling comprises a tool body formed of a foam material, the tool body with a forming surface having a near net shape, and a metal cover covering the forming surface of the tool body.

Yet another example of the present disclosure provides a method of rapidly generating tooling for composite layup and cure. A foam block is formed into a tool body with a forming surface having a near net shape. A low CTE material is additively deposited onto the forming surface to form a metal cover having a thickness in the range of 1/8 inch to 1/2 inch (0.3 cm to 1.3 cm). The metal cover is mechanically surface finished to net shape after additively depositing the low CTE material onto the forming surface, wherein mechanically surface finishing comprises at least one of sanding or surface machining.

Another example of the present disclosure provides a rapidly generated tooling for composite layup and cure. The rapidly generated tooling comprises a foam block formed into a tool body with a forming surface having a near net shape, and a low CTE material deposited onto the forming surface to form a metal cover mechanically surface finished to a net shape.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of illustrative examples of the present disclosure when read in conjunction with the accompanying drawings, wherein:
Figure 1 is an illustration of an aircraft;
Figure 2 is an illustration of a block diagram of a manufacturing environment;
Figure 3 is an illustration of rapidly generated tooling;
Figure 4 is a flowchart of a method of rapidly generating tooling for composite layup and cure;
Figure 5 is a flowchart of a method of rapidly generating tooling for composite layup and cure;
Figure 6 is an illustration of an aircraft manufacturing and service method in a form of a block diagram; and
Figure 7 is an illustration of an aircraft in a form of a block diagram.

### DETAILED DESCRIPTION

The illustrative examples recognize and take into account several considerations. The illustrative examples recognize and take into account that machining a CTE-matched carbon foam will be less expensive and less time consuming than conventional metal tooling. The illustrative examples recognize and take into account that although machining foam greatly reduces cost and flow time, carbon foam is brittle and can be damaged by multiple uses or in transportation.

The illustrative examples deposit a thin layer of a low CTE metal, such as nickel, to the tool surface. The illustrative examples greatly increase durability, maintain dimensional fidelity, and maintain CTE-matched tooling. The illustrative examples provide improved durability and handling of machined carbon foam composite layup tooling without sacrificing CTE match or dimensional precision.

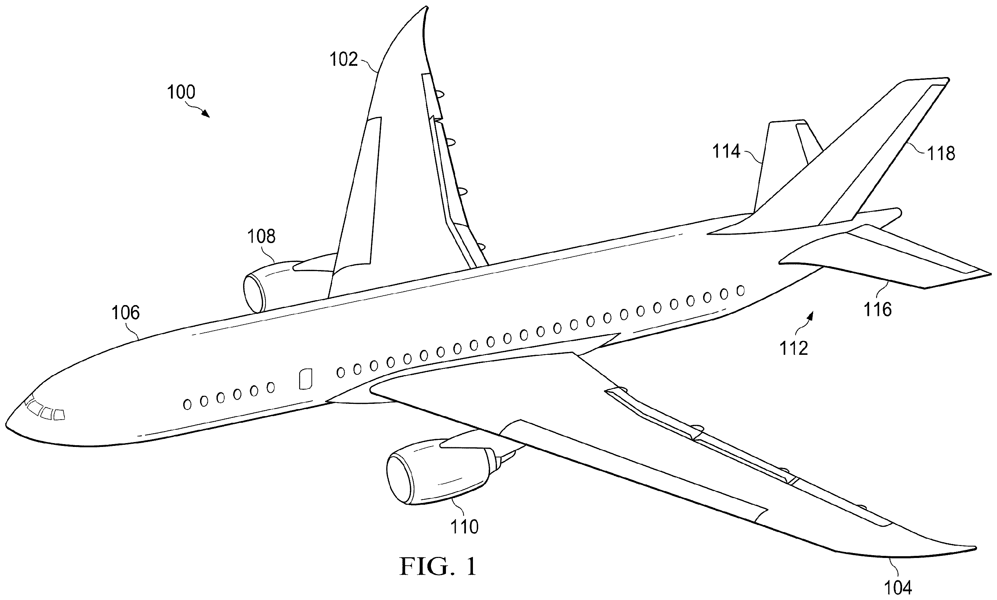

Turning now to Figure 1, an illustration of an aircraft is depicted in accordance with an illustrative example. Aircraft 100 has wing 102 and wing 104 attached to body 106. Aircraft 100 includes engine 108 attached to wing 102 and engine 110 attached to wing 104.

Body 106 has tail section 112. Horizontal stabilizer 114, horizontal stabilizer 116, and vertical stabilizer 118 are attached to tail section 112 of body 106.

Aircraft 100 is an example of an aircraft that can have composite components manufactured on rapidly generated tooling of the illustrative examples. In some illustrative examples, a portion of at least one of wing 102, wing 104, or body 106 can be manufactured on rapidly generated tooling of the illustrative examples.

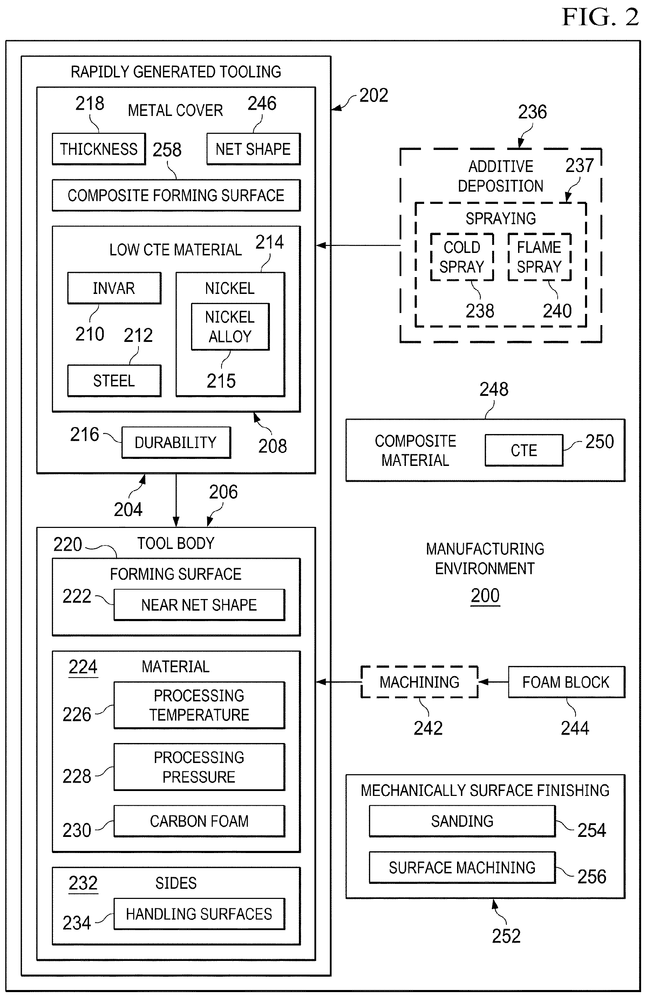

Turning now to Figure 2, an illustration of a block diagram of a manufacturing environment is depicted in accordance with an illustrative example.

Rapidly generated tooling 202 is configured for composite layup and cure. Rapidly generated tooling 202 comprises tool body 206 and metal cover 204. Tool body 206 is formed of a foam material. Tool body 206 comprises forming surface 220 having near net shape 222. Metal cover 204 covers forming surface 220 of tool body 206.

Metal cover 204 is formed of a low CTE material 208. In some illustrative examples, the low CTE material 208 comprises steel 212. In some illustrative examples, the low CTE material 208 comprises nickel 214. In some illustrative examples, the low CTE material 208 comprises nickel alloy 215. In some illustrative examples, metal cover 204 comprises Invar 210. In some illustrative examples, metal cover 204 comprises nickel 214.

In some illustrative examples, metal cover 204 is deposited by additive deposition. In some illustrative examples, tool body 206 comprises a carbon foam.

In this and certain other illustrative examples, metal cover 204 extends over sides 232 of tool body 206 for handling. Metal cover 204 has net shape 246. Metal cover 204 has composite forming surface 258. In this and certain other illustrative examples, composite material 248 is laid up and cured on rapidly generated tooling 202. As depicted, composite material 248 is positioned on composite forming surface 258 of metal cover 204.

In some illustrative examples, forming foam block 244 into tool body 206 comprises machining 242 foam block 244. Machining 242 foam block 244 can be a rapid method of manufacturing tool body 206.

Tool body 206 comprises material 224 that can withstand processing temperature 226 and processing pressure 228 greater than processing parameters of composite material 248. In some illustrative examples, material 224 comprises carbon foam 230.

Tool body 206 has forming surface 220 with near net shape 222 and sides 232 that can act as handling surfaces 234. In some illustrative examples, metal cover 204 is only applied to forming surface 220. In some illustrative examples, metal cover 204 extends to sides 232 to provide durability 216 to handling surfaces 234.

Metal cover 204 has sufficient thickness 218 to provide durability 216 to rapidly generated tooling 202. In some illustrative examples, metal cover 204 has sufficiently low thickness 218 to not undesirably add processing time to manufacturing rapidly generated tooling. In some illustrative examples, thickness 218 is not significantly larger than that sufficient to provide durability 216 in order to reduce material costs.

Low CTE material 208 is selected to significantly match CTE 250 of composite material 248 to be laid up and cured. In some illustrative examples, metal cover 204 is formed of low CTE material 208 compatible with and significantly matching CTE 250 of composite material 248 to be applied thereon. Low CTE material 208 may be referred to as a matched CTE material or substantially matched CTE material. In some illustrative examples, low CTE material 208 comprises at least one of steel 212 or nickel 214. In some illustrative examples, low CTE material 208 comprises Invar 210. In some illustrative examples, low CTE material 208 comprises nickel alloy 215.

Additive deposition 236 deposits low CTE material 208 on forming surface 220 of tool body 206 to form metal cover 204.

In some illustrative examples, additive deposition 236 comprises spraying 237. In some illustrative examples, additive deposition 236 comprises one of cold spray 238 or flame spray 240. After additive deposition 236 of low CTE material 208, metal cover 204 is mechanically surface finished to net shape 246. In some illustrative examples, mechanically surface finishing 252 comprises at least one of sanding 254 or surface machining 256.

Cold spray 238 methods can be leveraged to deposit a layer of nickel alloy 215 to machined surface, forming surface 220 of tool body 206. A small amount of low CTE material 208 is machined away to create a dimensionally-stable metallic tool surface, composite forming surface 258, with same/similar CTE 250 of composite material 248.

Rapidly generated tooling 202 comprises foam block 244 formed into tool body 206 with forming surface 220 having near net shape 222, and low CTE material 208 deposited onto forming surface 220 to form metal cover 204 mechanically surface finished to net shape 246.

Rapidly generated tooling 202 is a low cost tooling that provides high durability and a same or similar precision of more expensive all-metal tooling. Rapidly generated tooling 202 provides a greatly reduced flow time to conventional all-metal tooling.

The illustration of manufacturing environment 200 in Figure 2 is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in certain illustrative examples.

In some illustrative examples, multiple rigid blocks of carbon foam are bonded together into layers prior to machining 242. In these illustrative examples, the multiple foam blocks may be machined to near net shape 222 of a desired tool surface.

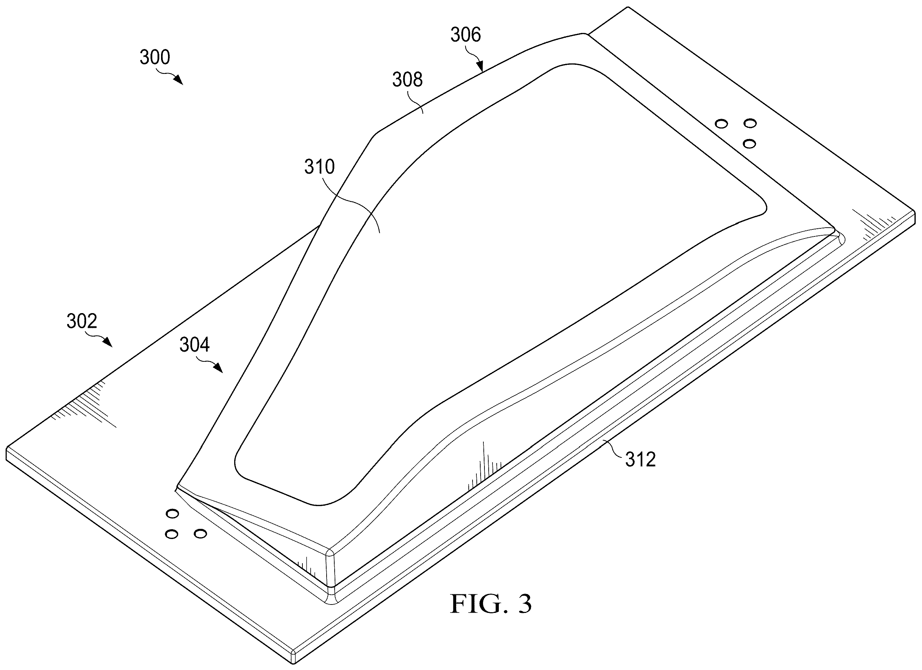

Turning now to Figure 3, an illustration of rapidly generated tooling is depicted in accordance with an illustrative example. Rapidly generated tooling 300 can be used to layup and cure composite components of aircraft 100 of Figure 1. Rapidly generated tooling 300 can be a physical implementation of rapidly generated tooling 202 of Figure 2.

Rapidly generated tooling 300 is configured for composite layup and cure. Rapidly generated tooling 300 comprises tool body 302 and metal cover 306. Tool body 302 is formed of a foam material. Tool body 302 comprises forming surface 304 having a near net shape. Metal cover 306 covers forming surface 304 of tool body 302.

Metal cover 306 is formed of a low CTE material. In some illustrative examples, the low CTE material comprises steel. In some illustrative examples, the low CTE material comprises nickel. In some illustrative examples, the low CTE material comprises a nickel alloy. In some illustrative examples, metal cover 306 comprises Invar. In some illustrative examples, metal cover 306 comprises nickel.

In some illustrative examples, metal cover 306 is deposited by additive deposition. In some illustrative examples, tool body 302 comprises a carbon foam.

In this and certain other illustrative examples, metal cover 306 extends over sides 312 of tool body 302 for handling. Metal cover 306 has a net shape. Metal cover 306 has composite forming surface 308. In this and certain other illustrative examples, composite material 310 is laid up and cured on rapidly generated tooling 300. As depicted, composite material 310 is positioned on composite forming surface 308 of metal cover 306.

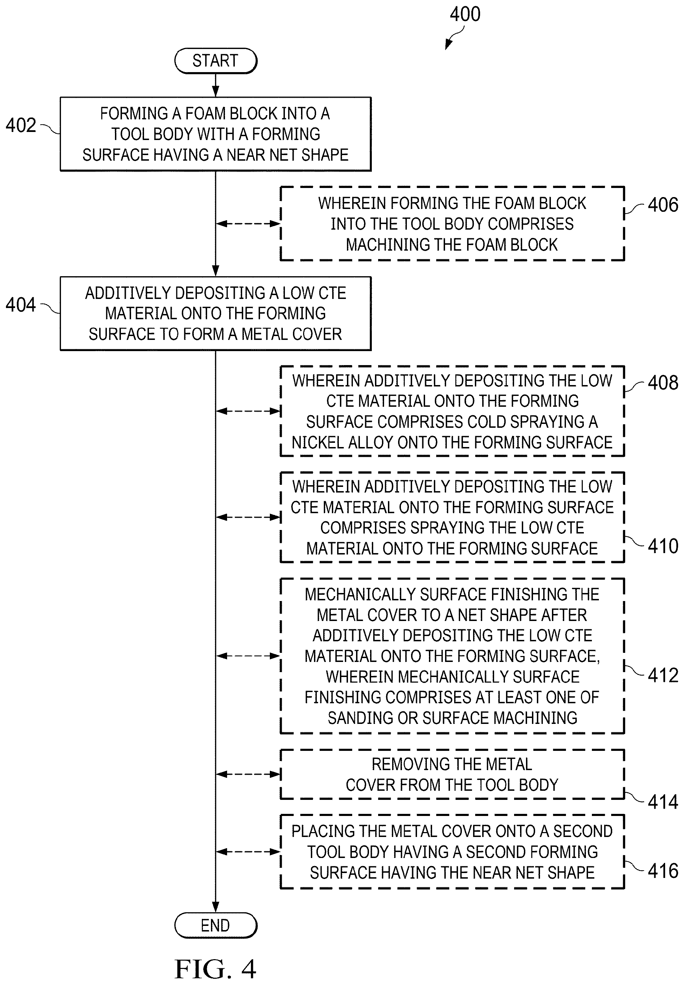

Turning now to Figure 4, a flowchart of a method of rapidly generating tooling for composite layup and cure is depicted in accordance with an illustrative example. Method 400 can be used to rapidly generate tooling for layup and cure of composite materials of a component of aircraft 100 of Figure 1. Method 400 can be performed to form rapidly generated tooling 202 of Figure 2. Method 400 can be performed to form rapidly generated tooling 300 of Figure 3.

Method 400 forms a foam block into a tool body with a forming surface having a near net shape (operation 402). Method 400 additively deposits a low CTE material onto the forming surface to form a metal cover (operation 404). Afterwards, method 400 terminates.

In some illustrative examples, forming the foam block into the tool body comprises machining the foam block (operation 406). Machining the foam block can be a rapid method of manufacturing the tool body.

In some illustrative examples, additively depositing the low CTE material onto the forming surface comprises spraying the low CTE material onto the forming surface (operation 410). In some illustrative examples spraying the low CTE material comprises one of cold spraying or flame spraying. In some illustrative examples, the metal cover has a thickness in the range of 1/8 inch to 1/2 inch (0.3 cm to 1.3 cm). In some illustrative examples, additively depositing a low CTE material onto the forming surface to form the metal cover comprises additively depositing a low CTE material to a thickness in the range of 1/8 inch to 1/2 inch (0.3 cm to 1.3 cm).

In some illustrative examples, method 400 mechanically surface finishes the metal cover to a net shape after additively depositing the low CTE material onto the forming surface, wherein mechanically surface finishing comprises at least one of sanding or surface machining (operation 412). Mechanically surface finishing the metal cover produces a forming surface configured to receive composite material for layup and curing.

In some illustrative examples, additively depositing the low CTE material onto the forming surface comprises cold spraying a nickel alloy onto the forming surface (operation 408). In some illustrative examples, the nickel alloy is Invar.

Metal cover is more durable than the tool body formed of the foam block. In some illustrative examples, the metal cover can be used on subsequent tool bodies having the same near net shape. In some illustrative examples, method 400 removes the metal cover from the tool body (operation 414). In some illustrative examples, method 400 places the metal cover onto a second tool body having a second forming surface having the near net shape (operation 416).

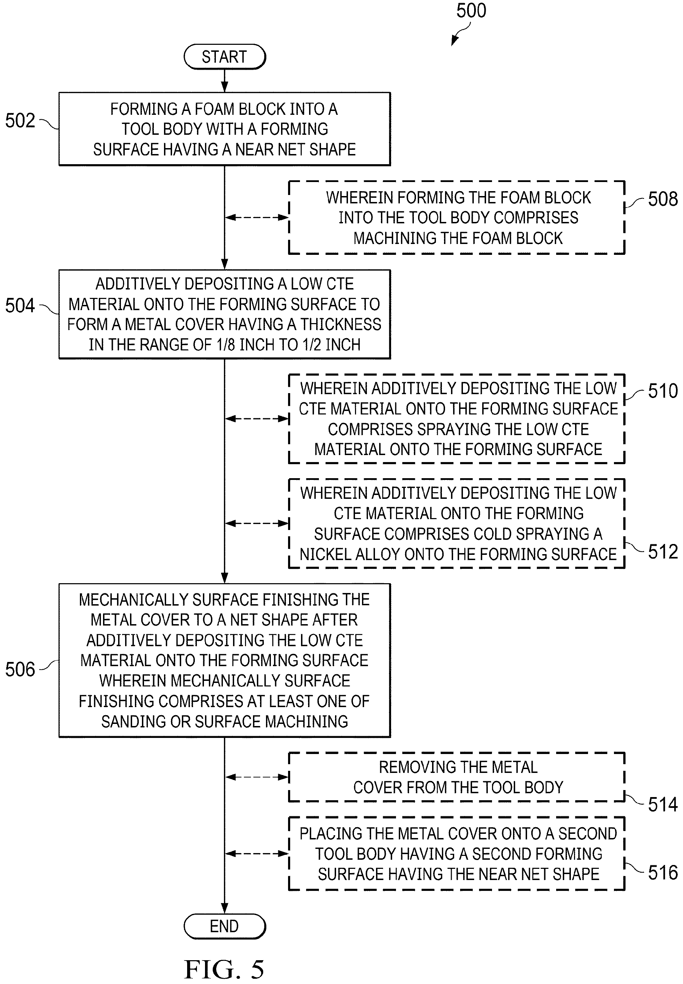

Turning now to Figure 5, a flowchart of a method of rapidly generating tooling for composite layup and cure is depicted in accordance with an illustrative example. Method 500 can be used to rapidly generate tooling for layup and cure of composite materials of a component of aircraft 100 of Figure 1. Method 500 can be performed to form rapidly generated tooling 202 of Figure 2. Method 500 can be performed to form rapidly generated tooling 300 of Figure 3.

Method 500 forms a foam block into a tool body with a forming surface having a near net shape (operation 502). Method 500 additively deposits a low CTE material onto the forming surface to form a metal cover having a thickness in the range of 1/8 inch to 1/2 inch (0.3 cm to 1.3 cm) (operation 504). Method 500 mechanically surface finishes the metal cover to a net shape after additively depositing the low CTE material onto the forming surface, wherein mechanically surface finishing comprises at least one of sanding or surface machining (operation 506). Afterwards, method 500 terminates.

In some illustrative examples, forming the foam block into the tool body comprises machining the foam block (operation 508). In some illustrative examples, prior to machining the foam block, several portions of foam can be adhered together. Machining the foam block is significantly faster than machining traditional metal tooling.

In some illustrative examples, additively depositing the low CTE material onto the forming surface comprises spraying the low CTE material onto the forming surface (operation 510). Spraying can take the form of either cold spraying or flame spraying.

In some illustrative examples, additively depositing the low CTE material onto the forming surface comprises cold spraying a nickel alloy onto the forming surface (operation 512). In some illustrative examples, the nickel alloy comprises Invar.

In some illustrative examples, method 500 removes the metal cover from the tool body (operation 514). In some illustrative examples, method 500 places the metal cover onto a second tool body having a second forming surface having the near net shape (operation 516).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible examples of apparatuses and methods in an illustrative example. In this regard, each block in the flowcharts or block diagrams may represent at least one of a module, a segment, a function, or a portion of an operation or step.

In some alternative examples, the function or functions noted in the blocks may occur out of the order noted in the figures. For example, in some cases, two blocks shown in succession may be executed concurrently or substantially concurrently, or the blocks may sometimes be performed in the reverse order, depending upon the functionality involved. Also, other blocks may be added in addition to the illustrated blocks in a flowchart or block diagram. Some blocks may be optional. For example, any of operation 406 through operation 416 may be optional. As another example, any of operation 508 through operation 516 may be optional.

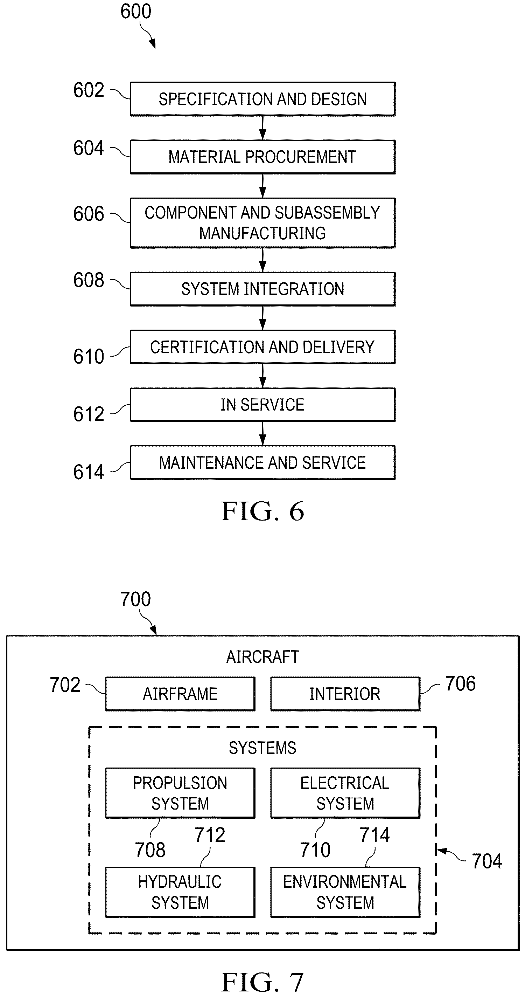

Illustrative examples of the present disclosure may be described in the context of aircraft manufacturing and service method 600 as shown in Figure 6 and aircraft 700 as shown in Figure 7. Turning first to Figure 6, an illustration of an aircraft manufacturing and service method in a form of a block diagram is depicted in accordance with an illustrative example. During pre-production, aircraft manufacturing and service method 600 may include specification and design 602 of aircraft 700 in Figure 7 and material procurement 604.

During production, component and subassembly manufacturing 606 and system integration 608 of aircraft 700 takes place. Thereafter, aircraft 700 may go through certification and delivery 610 in order to be placed in service 612. While in service 612 by a customer, aircraft 700 is scheduled for routine maintenance and service 614, which may include modification, reconfiguration, refurbishment, or other maintenance and service.

Each of the processes of aircraft manufacturing and service method 600 may be performed or carried out by a system integrator, a third party, and/or an operator. In these and certain other examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to Figure 7, an illustration of an aircraft in a form of a block diagram is depicted in which an illustrative example may be implemented. In this and certain other examples, aircraft 700 is produced by aircraft manufacturing and service method 600 of Figure 6 and may include airframe 702 with plurality of systems 704 and interior 706. Examples of systems 704 include one or more of propulsion system 708, electrical system 710, hydraulic system 712, and environmental system 714. Any number of other systems may be included.

Apparatuses and methods embodied herein may be employed during at least one of the stages of aircraft manufacturing and service method 600. One or more illustrative examples may be manufactured or used during at least one of component and subassembly manufacturing 606, system integration 608, in service 612, or maintenance and service 614 of Figure 6.

Certain illustrative examples deposit a thin layer of metal onto a tool body. In some illustrative examples, by depositing a thin layer of low CTE metal, such as nickel, to the tool surface, durability is increased, dimensional fidelity is maintained, and CTE-matched tooling is maintained. Spraying a low CTE metal, such as Invar, onto the foam tool body makes a machinable mandrel surface with desired CTE. Spraying a low CTE metal, such as Invar, onto the foam tool provides a method of manufacturing rapid mandrels. The illustrative examples provide methods for surfacing C-Foam tooling that has a high working temperature. The methods of the illustrative examples use a single instance of sanding/machining during mandrel fabrication.

In some illustrative examples, after milling the tool body from C-Foam, a low CTE metal such as Invar/nickel is Cold Sprayed onto the surface of the C-Foam to form a sandable/machinable surface that is CTE compatible with the composite material laid up upon it. In some illustrative examples, finish out could be sanding or machining using a 5 axis machine. In some illustrative examples, C-Foam has the same coefficient of expansion as the composite material being laid up and cured. In some illustrative examples, the composite material is a carbon composite.

In some illustrative examples, additively depositing the low CTE metal comprises spraying on heated powder to form a solid-state surface on the C-Foam without it going liquid. Certain ones of the illustrative examples save significant processing time. Additionally, manufacturing of the repair part can be accomplished in-house. Surface material of the rapidly generated tooling is now better suited for machining with extra material where needed like low spots.

In some illustrative examples, rigid blocks of carbon foam are bonded together into layers and machined to near net shape of desired tool surface. "Cold Spray" methods can be leveraged to deposit a layer of low CTE metal such as a nickel alloy to the machined surface. A small amount of the low CTE metal is machined away to create dimensionally-stable metallic tool surface with same/similar CTE of composite materials.

The low cost tooling of certain ones of the illustrative examples provides high durability and precision of more expensive all-metal tooling with greatly reduced flow time. Certain ones of the illustrative examples enable rapid production of high precision, CTE-matched tooling at a single manufacturing location. Certain ones of the illustrative examples enable rapid production of high precision, CTE-matched tooling at a greatly reduced cost and flow time.

Certain ones of the illustrative examples provide methods of more easily machining a tool body with limited CNC capability used. Utilizing blocks of carbon foam into the near net shape for the tooling shape is a key enabler. Additively deposited low CTE metal adds durability to the tool surface. In some illustrative examples, additively depositing the low CTE metal comprises and cold spray depositing a nickel alloy. By depositing a thin layer of low CTE material, such as a nickel alloy, to the tool surface durability is increased, dimensional fidelity is maintained, and CTE-matched tooling is maintained.

Further examples are set out in the following clauses.
Clause 1. A method of rapidly generating tooling for composite layup and cure, the method comprising:
   forming a foam block into a tool body with a forming surface having a near net shape; and
   additively depositing a low CTE material onto the forming surface to form a metal cover.
Clause 2. The method of Clause 1, wherein the metal cover has a thickness in the range of 1/8 inch to 1/2 inch (0.3 cm to 1.3 cm).
Clause 3. The method of Clause 1 or 2, wherein forming the foam block into the tool body comprises machining the foam block.
Clause 4. The method of any of Clauses 1 to 3, wherein additively depositing the low CTE material onto the forming surface comprises spraying the low CTE material onto the forming surface.
Clause 5. The method of any of Clauses 1 to 4 further comprising:
   mechanically surface finishing the metal cover to a net shape after additively depositing the low CTE material onto the forming surface, wherein mechanically surface finishing comprises at least one of sanding or surface machining.
Clause 6. The method of any of Clauses 1 to 5, wherein additively depositing the low CTE material onto the forming surface comprises cold spraying a nickel alloy onto the forming surface.
Clause 7. The method of any of Clauses 1 to 6 further comprising:
   removing the metal cover from the tool body; and
   placing the metal cover onto a second tool body having a second forming surface having the near net shape.
Clause 8. A rapidly generated tooling for composite layup and cure comprising:
   a tool body formed of a foam material, the tool body with a forming surface having a near net shape; and
   a metal cover covering the forming surface of the tool body.
Clause 9. The rapidly generated tooling of Clause 8, wherein the metal cover is formed of a low CTE material.
Clause 10. The rapidly generated tooling of Clause 9, wherein the metal cover is formed of a low CTE material compatible with and significantly matching a CTE of a composite material to be applied thereon.
Clause 11. The rapidly generated tooling of any of Clauses 8 to 10, wherein the metal cover comprises Invar.
Clause 12. The rapidly generated tooling of any of Clauses 8 to 11, wherein the metal cover comprises nickel.
Clause 13. The rapidly generated tooling of any of Clauses 8 to 12, wherein the metal cover is deposited by additive deposition.
Clause 14. The rapidly generated tooling of any of Clauses 8 to 13, wherein the tool body comprises a carbon foam.
Clause 15. The rapidly generated tooling of any of Clauses 8 to 14, wherein the metal cover extends over sides of the tool body for handling.
Clause 16. The rapidly generated tooling of any of Clauses 8 to 15, wherein the metal cover has a net shape.
Clause 17. A method of rapidly generating tooling for composite layup and cure, the method comprising:
   forming a foam block into a tool body with a forming surface having a near net shape;
   additively depositing a low CTE material onto the forming surface to form a metal cover having a thickness in the range of 1/8 inch to 1/2 inch (0.3 cm to 1.3 cm); and
   mechanically surface finishing the metal cover to net shape after additively depositing the low CTE material onto the forming surface, wherein mechanically surface finishing comprises at least one of sanding or surface machining.
Clause 18. The method of Clause 17, wherein forming the foam block into the tool body comprises machining the foam block.
Clause 19. The method of Clause 17 or 18, wherein additively depositing the low CTE material onto the forming surface comprises spraying the low CTE material onto the forming surface.
Clause 20. The method of any of Clauses 17 to 19, wherein additively depositing the low CTE material onto the forming surface comprises cold spraying a nickel alloy onto the forming surface.
Clause 21. The method of any of Clauses 17 to 20 further comprising:
   removing the metal cover from the tool body; and
   placing the metal cover onto a second tool body having a second forming surface having the near net shape.
Clause 22. A rapidly generated tooling for composite layup and cure comprising:
   a foam block formed into a tool body with a forming surface having a near net shape; and
   a low CTE material deposited onto the forming surface to form a metal cover mechanically surface finished to a net shape.
Clause 23.The rapidly generated tooling of Clause 22, wherein the metal cover has a thickness in the range of 1/8 inch to 1/2 inch (0.3 cm to 1.3 cm).

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The examples selected are chosen and described in order to best explain the principles of the examples, the practical application, and to enable others of ordinary skill in the art to understand the disclosure for various examples with various modifications as are suited to the particular use contemplated.

## Claims

1. A method (400) of generating tooling for composite layup and cure, the method (400) comprising:
forming (402) a foam block (244) into a tool body (206, 302) with a forming surface (220, 304); and
additively (404) depositing a material (224) onto the forming surface (220, 304) to form a metal cover (204, 306).

2. The method (400) of claim 1, wherein additively (404) depositing the material (224) comprises additively (404) depositing a low coefficient of thermal expansion material (224) onto the forming surface (220, 304) to form a metal cover (204, 306), for example a low coefficient of thermal expansion material (224) having a coefficient of thermal expansion less than 15 x 10⁻⁶ /°C.

3. The method (400) of claim 1 or 2, wherein the metal cover (204, 306) has a thickness (218) in the range of 1/8 inch to 1/2 inch (0.3 cm to 1.3 cm).

4. The method (400) of any preceding claim, wherein (406) forming the foam block (244) into the tool body (206, 302) comprises machining (242) the foam block (244).

5. The method (400) of any preceding claim, wherein (410) additively depositing the material (224) onto the forming surface (220, 304) comprises spraying (237) the material (224) onto the forming surface (220, 304), optionally cold spraying (238) a nickel alloy (215) onto the forming surface (220, 304).

6. The method (400) of any preceding claim, wherein forming (402) the foam block (244) comprises forming (402) the foam block (244) into the tool body (206, 302) with a forming surface (220, 304) having a near net shape (222).

7. The method (400) of any preceding claim further comprising:
mechanically surface finishing (252, 412) the metal cover (204, 306) to a net shape (222, 246) after additively depositing the material (224) onto the forming surface (220, 304), wherein the mechanically surface finishing (252) comprises sanding (254) and/or surface machining (242).

8. The method (400) of any preceding claim further comprising:
removing (414) the metal cover (204, 306) from the tool body (206, 302); and
placing (416) the metal cover (204, 306) onto a second tool body having a second forming surface having the same shape (222).

9. A tooling (202, 300) for composite layup and cure comprising:
a tool body (206, 302) formed of a foam material (224), the tool body (206, 302) having a forming surface (220, 304); and
a metal cover (204, 306) covering the forming surface (220, 304) of the tool body (206, 302).

10. The tooling (202, 300) of claim 9, wherein the metal cover (204, 306) is formed of a low coefficient of thermal expansion material (224), for example a low coefficient of thermal expansion material (224) having a coefficient of thermal expansion less than 15 x 10⁻⁶ /°C .

11. The tooling (202, 300) of claim 10, wherein the metal cover (204, 306) comprises Invar or nickel (214).

12. The tooling (202, 300) of any of claims 8 to 10, wherein:
the metal cover (204, 306) is deposited by additive deposition (236); and/or
the metal cover (204, 306) extends over sides (232, 312) of the tool body (206, 302) for handling.

13. The tooling (202, 300) of any of claims 8 to 11, wherein the tool body (206, 302) comprises a carbon foam (230).

14. The tooling (202, 300) of any of claims 8 to 13, wherein:
the forming surface (220, 304) comprises a near net shape (222); and/or
the metal cover (204, 306) has a net shape (222, 246).

15. The tooling (202, 300) of any of claims 8 to 14 and a composite material for layup and curing on the tooling (202,300), wherein the metal cover (204, 306) is formed of low coefficient of thermal expansion material (224) that is compatible with and matching or significantly matching a coefficient of thermal expansion (250) of the composite material (248).
